# EUROPEAN PATENT SPECIFICATION

(11) **EP 1 318 652 B1**
(45) Date of publication and mention of the grant of the patent: **23.02.2005**
(21) Application number: 01129107.7
(22) Date of filing: 07.12.2001
(51) Int. Cl.: H04M 1/725, H04M 1/60

(54) **Identification of code transmissions sent by an accessory device to a mobile terminal depending on a previous code value**
Von einem vorherigen Kodewert abhängige Erkennung von von einem Zubehörgerät zu einem mobilen Endgerät gesendeten Übertragungskoden
Identification en fonction d'une valeur de code précédente de codes de transmission envoyé par un dispositif accessoire à un terminal mobile

(43) Date of publication of application: 11.06.2003
(73) Proprietor: Sony International (Europe) GmbH, 10785 Berlin (DE)
(72) Inventor: Lechner, Thomas, Sony Ericsson Mobile Com. Int. AB, 85609 Aschheim-Dornach (DE)
(74) Representative: Körber, Martin, Dipl.-Phys.

(56) References cited:
- EP-A- 0 695 072
- WO-A-00/42797
- WO-A-00/65445
- WO-A-00/74350
- WO-A-99/53621
- US-A- 5 964 847

## Description

The present invention relates to a data communication between a mobile terminal and its accessory. In particular, it relates to a two-fold use of identification codes presented by an accessory device to a mobile terminal.

Almost all up-to-date mobile phones have a multiple pole connector for connecting different accessory devices. Some accessory devices, like an FM radio, an MP3 player, a flashing aerial or a vibrator extend the functionalities of a mobile communication device. Others are necessary to use certain functions of the mobile terminal like an infrared modem, a data cable, or a headset or the like. The multiple pole connector is also used with chargers and especially with hands-free and car kits.

Because every accessory device serves a certain purpose, and the number of poles available on the multiple pole connector is limited, only one pole of the connector is used for the identification of the type of the respective accessory device. The identification is usually based on an analogue value of a voltage, resistance or current with reference to a common ground potential of the connector.

The available range of the respective physical entity is usually partitioned into a number of smaller sub-regions for identification. Each sub-region represents a certain code value which is related to a certain type of an accessory.

WO 00/65445 A discloses an identification method based on a measurement of a voltage on a signal line of a portable computer which is coupled to the accessory device. On connecting an accessory device to the portable computer, the voltage on the signal line changes, indicating hereby that an electrical connection between the accessory device and the portable computer is established. Each type of accessory device produces a definite voltage on the signal line. The portable computer is thus enabled to identify each respective device by looking up the determined voltage value in a list associating each signal voltage with a certain accessory type. Distinguishing between accessory devices by identifying their respective type enables the portable computer to select or alter programming in order to accommodate with the respective accessory connected.

Due to tolerances allowed in the generation and measurement of the analogue value used for representing a code value, the number of discernible code values is usually limited, e.g. to a number between 5 and 10.

US 5,964,847 A relates to a tripartite system formed by a computing device, a holster, and a radio transceiver. The holster serves as a docking station interconnecting the radio transceiver with the computing device. The identity of the docking station or radio transmitting accessory is provided for a docking interface of the computing device. The identity information is a three-bit information which is serially read out using a clock impulse from the computing device, whereby the first most-significant-bit identifies the type of register used for storing the identification information.

Many accessory devices are not only passive devices but are adapted to transmit certain information to the mobile terminal. Especially car kits will no longer be simple dumb devices but will provide easy accessible input means for controlling the mobile terminal without being distracted. A respective car kit would e.g. have keys for "call accept", "end call", "start voice dialling", "volume up", and "volume down". These keys could e.g. be integrated into the dash board or the steering wheel of a car allowing the driver to control the mobile phone with a minimum of attention. As can further be seen from the example, this type of information is one way, or more precisely is directed from the accessory device to the mobile terminal and therefore referenced as an instruction in the course of the specification.

Since the number of poles in the multiple pole connector is limited, no extra connection line can be reserved for the transmission of these instructions. The above described code value identification mechanism could also be used for the transmission of instructions from an accessory device to the mobile terminal. Unfortunately, the limitation of available code values to a number between 5 and 10 as mentioned above does not allow to add extra code values for instructions to the set of accessory identification code values.

It is therefore an object of the present invention to provide a method, a mobile terminal and a software product that allow to utilise a limited set of code values for identifying accessory devices and for transmitting instructions from an accessory device to a mobile terminal.

This object is achieved by a multiple usage of code values as claimed in the independent claims.

The above object is achieved in particular by a method for identifying an information content assigned to a code value received by a mobile terminal with the code value either representing identifying information or an instruction, and with an identifying information having a code value identical to a code value of an instruction, whereby the information content assigned to a code value is identified depending on the history of the preceding code values.

The above object is further achieved by a mobile terminal adapted to be connected with accessory devices comprising an evaluation means for evaluating a code value which is represented by an electrical condition associated with a connection of an accessory device and/or a state thereof, whereby the evaluation means identifies an information content assigned to a code value depending on the history of the precedingly identified code values.

The above object is further achieved by an accessory device adapted to be connected with a mobile terminal according to the present invention, whereby a locking means is provided for locking the accessory device to an electrical condition which represents a code value according to the type of the accessory device upon the accessory device being connected to the mobile terminal.

The above object is further achieved by a software for use on a mobile terminal adapted to perform a method according to the present invention when being stored in a storage means and executed by a processing means of the respective mobile terminal.

The present invention allows a multiple usage of a limited set of code values for identifying as well as controlling purposes. It further allows a developer of a new accessory device with additional control functions to resort to the conventional multiple pole connector design for a transmission of instructions.

Additional advantageous features of the present invention are claimed in the respective dependent claims.

Advantageously, a distinguished unique information content is exclusively assigned to a distinguished unique code value, whereby the evaluation means further advantageously identifies the information content of the distinguished unique code value as no accessory device being connected to the mobile terminal. The distinguished unique code value allows to re-establish a defined initial state for starting of a new history of subsequently transmitted code values.

Further advantageously, an information content assigned to a code value succeeding the distinguished unique code value is identified as identifying information, in particular as a code value identifying the type of an accessory device. By that it is achieved that with an accessory device going to be connected to the mobile terminal, the code value will be identified from a first set of code values relating the types of different accessories to the respective code values.

Further, an information content assigned to a code value succeeding a code value being identifying information is advantageously identified as an instruction, particularly, as an instruction from the accessory device identified before. Thus, it is achieved that once the type of the accessory is identified, every following code value represents an instruction from that type of accessory which can be identified from a second set of code values directly related to the particular accessory device.

The electrical condition associated with the connection of an accessory device is preferably constituted by a voltage level and/or by an intensity of a current flow. Both provide an easy to implement physical entity for the representation of code values.

The present invention can be used for every mobile terminal adapted to be used with accessories, but can further be used with any type of appliances using a line connection with a limited set of transmissible code values to extensions or accessory devices, whereby several extensions or accessories may be used alternatively.

In the following specification, the present invention is described in more detail in relation to the enclosed drawings, in which
Fig. 1 shows an exemplary procedure for a method according to the present invention,
Fig. 2 shows an example of code tables stored in the mobile terminal,
Fig. 3 is a function diagram showing the code switching associated with different accessory devices and
Fig. 4 shows the main components of a mobile terminal and of an accessory device according to the present invention.

The present invention is based on the fact, that when an accessory device is exchanged for another one on a mobile terminal, the first accessory device has always to be disconnected before the second accessory device can be connected to the mobile terminal. This means, that on exchanging a mobile terminal accessory there will always exist a state, however short it might be, where no accessory is connected to the mobile terminal. The status, that no accessory device is connected to the mobile terminal or in short the status "no accessory" is distinguished from any other status in that it always precedes the connecting of an accessory device. In other words, the status "no accessory" is an initial status forming a fixed point of reference for the interpretation of a succeeding status.

To be more concrete, a status following the "no accessory" has to be the identification of an accessory attached to the mobile terminal. Because the identity of an accessory device will not change as long as it stays connected to the mobile terminal, any code value different from the code value representing the identity of the accessory device has to be interpreted as an instruction from that specific accessory device unless a new code value represents the initial state "no accessory device". A change in the code value from the accessory device may e.g. rise from operating the accessory or may be initiated by a certain function of it. A user may e.g. have pressed a key on the accessory device, or the accessory may e.g. control the pulse rate of a user with the accessory device providing a certain code value at every detected pulse. In short, any code value that comes second or later to the initial code value represents an instruction from the respective accessory device which identity is proved by the first code value following the initial status code value.

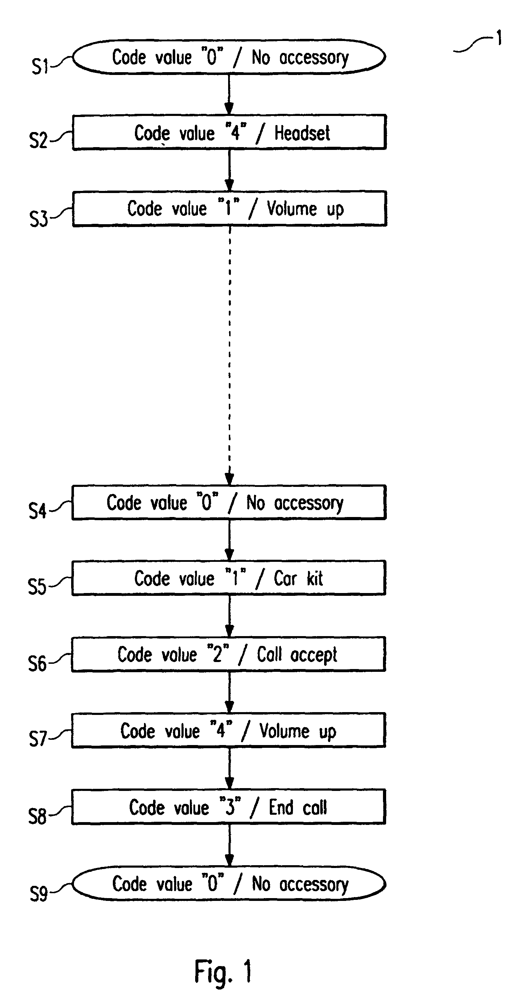

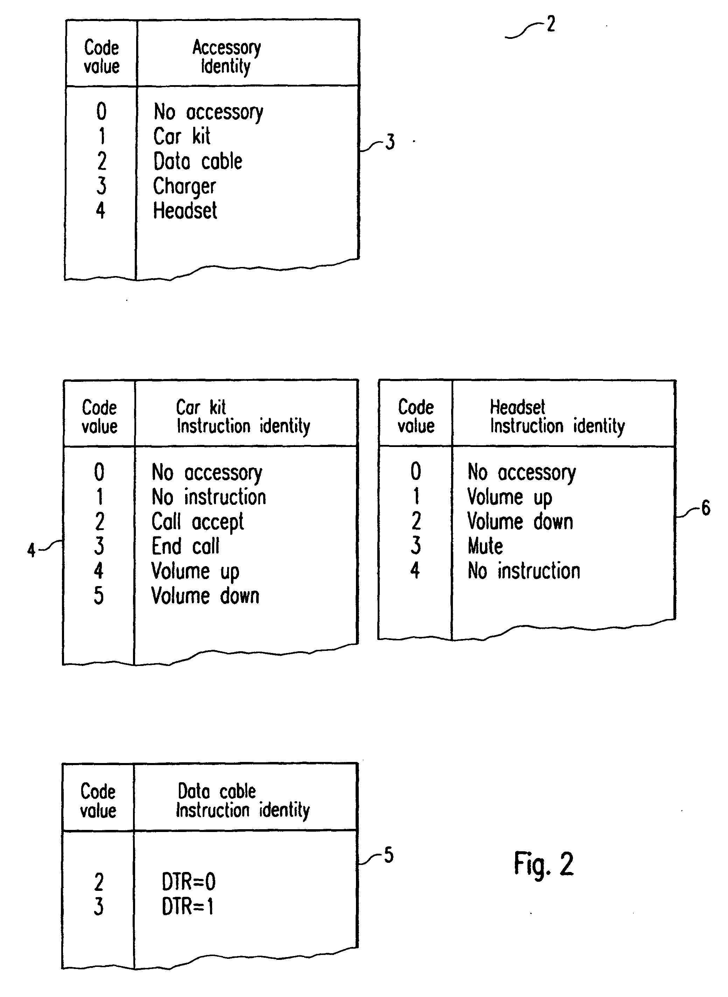

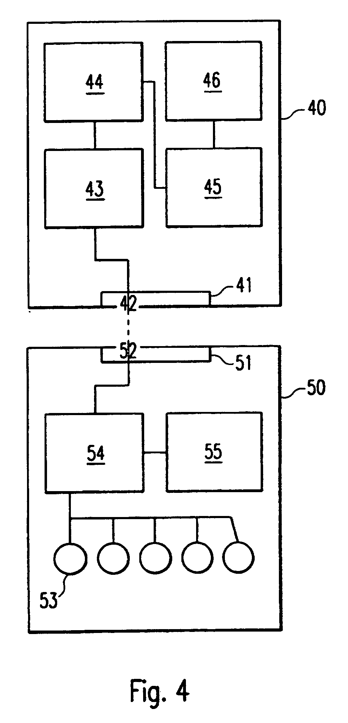

The procedure 1 shown in Fig. 1 illustrates the above described functionality. The procedure starts in step S1 with the initial status which is assigned a code value of "0" and an information content "no accessory". Next a headset is connected to the mobile terminal and a code value present at the respective pole of the multiple pole connector changes to a value of "4" in step S2. Because this is the first code value different from the initial status, the information content of code value "4" is identified from a table 3 (see Fig. 2) relating code values with accessory identifications. The present code value "4" is consequently interpreted as the identification of the headset connected to the mobile terminal. Next, a user presses a key for increasing the volume on is headset in step S3. The code value present at the respective pole of the multiple pole connector changes now to one and is interpreted as an instruction from the headset because the preceding code value was different from that for the initial status. To identify the instruction associated with the code value of one, a table 6 containing the relations between the code values and the respective instructions for a headset with the accessory identification assigned to a code value "4" is browsed. Every following operation of the headset by the user is now interpreted from the headset table 6, shown in Fig. 2. At one time or another the user will disconnect the headset from the mobile terminal 40 (see Fig. 4) so that the code value present at the respective pole of the connector will change to "0" meaning "no accessory".

When the user next decides to connect his mobile terminal to a car kit, the car kit will identify itself to the mobile terminal with its respective type identifying code value. This is shown in step S5 of Fig. 1 where the identification code value for the car kit is shown as being "1". In step S6 the user receives a call and presses a respective key on the car kit for accepting the call. He hereby changes the code value to "2". Because this code value is the second code value following the initial code value of step S4 it is interpreted as an instruction, the content of which is identified from table 4 shown in Fig. 2. The table 4 contains the relation between code values and the associated instructions for the car kit with a type identifying code value "1". In step S7, the user presses a key for increasing the volume thereby changing the code value to "4", now being interpreted by the mobile terminal as an instruction from the car kit meaning "volume up". Finally, the user hangs up in step S8 by pressing a respective key of the car kit and thereby changing the code value to "3". This is interpreted by the mobile terminal as "end call", an instruction to terminate the current call. Later, the user takes the mobile terminal from the car kit in step S9, thereby changing the code value present at the connector of the mobile terminal to "0", which corresponds to the initial status.

In another embodiment of the present invention, a code value representing an instruction like e.g. "call accept", "volume up" or "end call" is only present as long as the assigned key on the respective accessory is pressed. When releasing the key, the code value at the respective pole of the multiple pole connector returns to the code value representing the identification value of the respective accessory. With reference to the car kit example of Fig. 1, the code value will change from "0" to "1" when the car kit is being connected to the mobile terminal, and will change from "1" to "2" when a key on the car kit representing "call accept" is going to be pressed. With releasing this key, the code value will return from "2" to "1" until the key for increasing the volume will be pressed thereby changing the code value from "1" to "4". When this key is going to be released, the code value will again returns to "1", and so on.

The tables of a database used for identifying an information content of a code value is shown in Fig. 2. An ID-table 3 contains the relations between code values used for an accessory device identification and the respective accessory identities. Sub-tables are provided for some accessory identities, hosting accessory device dependent instruction identifications. Sub-table 4 e.g. is related to a car kit with the identity code value "1". This means that when the respective car kit has identified itself with an identity code value "1", the next following code values will represent instructions which are identified from the car kit table 4. Although it does not have to be explicitly stated in a sub-table, the initial value "0" will instruct the mobile device to return to the ID-table for a next code value identification. What has been said for the car kit is also applicable to the sub-table 5 for a data cable accessory and a sub-table 6 for a headset accessory shown in Fig. 2.

Each sub-table also contains an entry for a code value which is identical to the identifying code value of the respective accessory device. It is assigned the instruction value "no instruction" to avoid any unstable states of the system. The use of an identity code value in a sub-table can also be used differently, but the assigned instruction must not collide with "no instruction". In the example of the sub-table 5 for the data cable with identifying code value "2", the code value "2" is e.g. assigned to the instruction "data transmission not active" in contrast to the instruction "data transmission active" assigned to the code value 3. Because the first instruction only characterises the basic status of the data cable, no misinterpretation with the identifying value has to be feared.

An alternative embodiment of the present invention doesn't present code values statically but for a limited time period only. Only when the status of the accessory device changes, a code value will be present for a certain time period at the respective pole of the multiple pole connector. Else, no code value will be present representing the status "no instruction". The identifying code value of an accessory can then be used for a further instruction.

Instead of a one-to-one relation for accessory identities to their respective sub-tables, a more than one-to-one relation can be set up allowing the use of one and the same sub-table by different accessory devices having different identifying code values, as long as the same code values represent the same identical instructions for each of these accessories. Especially with a time limit for a code presentation as described above, the values of the respective accessory identity codes can be reused in such a sub-table for other information than just that no instruction is given just now.

But a more than one-to-one relation can also be implemented with statically presented code values when the number of accessory devices using the same sub-table plus the instructions available on these devices do not exceed the number of available code values. Then, every code value which is used for an identification of an accessory device will be assigned the meaning of no instruction in that particular sub-table.

For accessories which provide no special functionality requiring a transmission of instructions to a mobile terminal like the charger in the example of Fig. 2, only an entry in the ID table 3 which is not related to any sub-table is required.

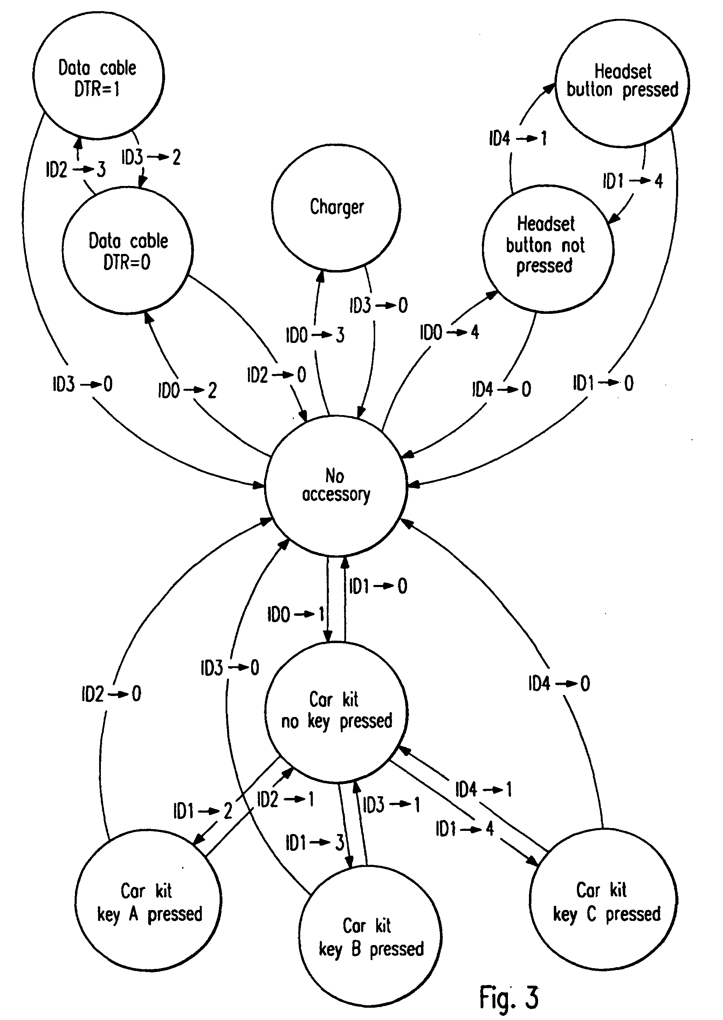

Fig. 3 illustrates that any act of exchanging an accessory will always reset a system according to the present invention to an initial state "no accessory". Like in the examples described above, a code value "0" is assigned to this initial state. When an accessory like e.g. those charger, headset, or car kit shown in database 2 are being connected to the mobile terminal, the code value presented at the respective contact pole of the multipole connector will be interpreted as the respective accessory identity code value. If then a certain function of the accessory, like e.g. a data transmission through the data cable will become active, or if a user then activates an operation control by e.g. pressing a key of the car kit, the code value will change and hereby indicate a status change of the accessory device or an operating instruction initiated thereon. If the function or operating instruction is no longer active, the code value resets to the code value representing the identity of the respective accessory device thereby indicating either an idle state or a retention of its current state. But, whenever the accessory is disconnected from the mobile terminal, the system will reset to the initial status "no accessory".

For example, when a data cable is connected to the mobile terminal, the code value changes from "0" to "2". No data are hereby transmitted over the cable. When a data transmission starts, the code value will change from "2" to "3", and when it ends again, it will change back from "3" to "2". Independent of a data transmission running (code value "3") or being idle (code value "2"), the code value will be reset to "0" as soon as the data cable will be disconnected from the mobile terminal. When the charger of the example of Fig. 3 is being connected to the mobile terminal, the code value will change to "3" and will be reset to "0" when removing it. Connecting the headset to the mobile terminal sets the code value to "4". Pressing a respective button on the connected headset will change the code value to "1". The car kit of the example identifies itself as a code value "1", which will be changed when a key is pressed. For instance to a code value of "2" for key "A", "3" for key "B", and "4" for key "C". Although the given code values are only exemplary values, the example of Fig. 3 illustrates the code value changes associated with any exchange of accessory devices and any use of functions or control means provided by these devices.

Fig. 4 shows a mobile terminal 40 and an accessory device 50 according to the present invention. Both devices can be connected to each other by means of their multiple pole connectors which are constructed complementary to each other.

The pole 42 for the detection of a code value is located on the multiple pole connector 41 on the mobile terminal 40, and is connected to the physical code detection means 43 for determining the respective electrical condition present at the pole 42 which represents the respective code value. When codes are provided in the physical form of a voltage, the physical code detection means 43 comprises a voltage measurement unit for determining the voltage levels according to the respective code values. For providing a code value, an accessory device may contain a current generator, so that for this case the physical code detection means will comprise a current measurement unit. The code value may, on the side of the accessory device be further represented by a resistance value provided between the pole 52 for the code transfer and a ground potential. In this case, the physical code detection means 43 determines the current flow through the resistance for a fixed voltage or vice-a-versa determines the voltage value across the resistance for a fixed current. The value determined according to any of the methods is handed over to the evaluation means 44 which associates the physical value to a logical value used for further processing. The processing means 45 checks the historical context of each new code value delivered by the evaluation means 44. Once the historical context is clarified, the evaluation means 44 retrieves the appropriate information content from an adequate table located in the data storage means 46 of the mobile terminal 40.

The processing means 45 and the data storage means are further designed to execute application specific software like for the case of a pulse rate meter, where each detected heartbeat has to be associated with its time of occurrence and the sum of the heartbeats will have to be displayed in their respective time context.

The accessory device 50 shown in Fig. 4 is an example for a device offering a control of functions available at the mobile terminal by means of control keys 53. But it is clear, that for a representation of other accessories those control keys may have to be replaced by special functions of the device or sensors like e.g. sensors for a pulse measurement or a blood pressure or anything like that. The control key means and/or the other mentioned means 53 are linked to the code generating means 54 which transforms every activity on the control keys 53 and/or any functionalities into a respective physical entity representing an electrical condition understood as a code value by the mobile terminal 40. Complementary to the means for the physical code detection 43 on the mobile terminal 40, code values are either presented in form of a certain resistance value which can be implemented by a switchable resistor bank, or by a voltage or by a current source. It should be noted, that the physical form of the code values are not really alternative to each other, but that different accessory devices 50 can use different forms for a code value generation which form will be detected by the physical code detection means 43 which then selects a measuring circuit suited for determining the code value itself.

When the accessory device 50 is being connected to the mobile terminal 40 it has to be made sure that the code value present on pole 52 of the connector 51 is the code value representing the accessory ID and not one of a control key pressed or of a function active. For this reason, a code locker 55 controls the status on pole 52 when the accessory is being connected to the mobile terminal. This can be either done by a simple electromechanical snap-on/release notch or detent, which will be activated automatically when the two complementary connectors 41 and 51 on the mobile terminal 40 and accessory device 50, respectively, are connected to each other. The electromechanical apparatus may alternatively set default values for an accessory device 50 when being disconnected. A code locker 55 may also be implemented as an electronic or electromechanical circuit controlling the connecting condition on the multipole connector 51 and setting the default accessory ID value for the accessory device 50 being disconnected. Electronic switches or micro-relays may hereto use supply voltages present on a pole of the multiple pole connector 41 of the mobile terminal 40.

The present invention advantageously allows a multiple use of a limited set of code values for use of a variety of accessory devices with a mobile terminal which provide means for controlling functions on the mobile terminal or provide advanced functions generating data used by a special application on the mobile terminal without any need for providing additional lines for the additional information transmission.

## Claims

1. Method for identifying an information content assigned to a code value determined at a connector (41) of a mobile terminal (40), whereby the code value either represents a first type of information content for identifying an accessory device (50) which is connected to the connector (41) or a second type of information content representing different information,
**characterised in**
**that**, whether a code value represents a first type of information content or a second type of information content is decided depending on the history of the preceding code values, whereby the first type of information content can have a code value identical to a code value of the second type of information content.

2. Method according to claim 1,
**characterised in**
**that** a distinguished unique information content is exclusively assigned to a distinguished unique code value.

3. Method according to claim 2,
**characterised in**
**that** an information content assigned to a code value succeeding said distinguished unique code value is identified as information content identifying an accessory device (50).

4. Method according to claim 3,
**characterised in**
**that** an information content assigned to a code value succeeding a code value identifying an accessory device (50) is identified as an instruction.

5. Mobile terminal (40) adapted to be connected with accessory devices (50) comprising an evaluation means (44) for evaluating a code value which is represented by an electrical condition being present at a connector (41) for connecting the mobile terminal (40) to an accessory device (50), and which is associated with a connection of the accessory device (50),
**characterised in**
**that** the evaluation means (44) is adapted to identify an information content assigned to the code value which either represents a first type of information content for identifying an accessory device (50) being connected to the connector (41) or a second type of information content representing different information, whereby the first type of information content can have a code value identical to a code value of the second type of information content and whether a code value represents the first type of information content or the second type of information content is decided depending on the history of the preceding code values

6. Mobile terminal according to claim 5,
**characterised in**
**that** the evaluation means (44) is adapted to identify the information content of a distinguished unique code value as no accessory device being connected to the mobile terminal.

7. Mobile terminal according to claim 6,
**characterised in**
**that** an information content assigned to a code value succeeding said distinguished unique code value is identified as information content identifying an accessory device
(50).

8. Mobile terminal according to claim 7,
**characterised in**
**that** an information content assigned to a code value succeeding a code value being identified as information content identifying an accessory device (50) is identified as an instruction from the accessory device identified.

9. Mobile terminal according to one of the claims 5 to 8,
**characterised in**
**that** said electrical condition associated with a connection of an accessory device is constituted by a voltage level.

10. Mobile terminal according to one of the claims 5 to 8,
**characterised in**
**that** said electrical condition associated with a connection of an accessory device is constituted by an intensity of a current flow.

11. Accessory device adapted to be connected with a mobile terminal (40) according to one of the claims 5 to 10, the accessory device (50) having a code generating means (54) for generating an electrical condition representing a code value,
**characterised in**
**that** the code generating means (54) is adapted to transform a function of the accessory device (50) into a respective code value, and that the accessory device (50) comprises a locking means (55) which is adapted to control the electrical condition to represent a code value identifying the accessory device (50) upon the accessory device (50) being connected to the mobile terminal (40).

12. Software product for use on a mobile terminal (40) adapted to perform a method according to one of the claims 1 to 4 when being stored in a storage means (46) and executed in a processing means (45) of a respective mobile terminal (40).

## Patentansprüche

1. Verfahren zum Identifizieren eines Informationsinhalts, der einem an einem Verbinder (41) eines mobilen Endgeräts (40) ermittelten Codewert zugeordnet ist, wobei der Codewert entweder einen ersten Typ von Informationsinhalt zur Identifizierung eines mit dem Verbinder (41) verbundenen Zubehörgeräts (50) oder einen eine andere Information repräsentierenden zweiten Typ von Informationsinhalt repräsentiert,
**dadurch gekennzeichnet,**
**daß** in Abhängigkeit von der Historie der vorangehenden Codewerte entschieden wird, ob ein Codewert einen ersten Typ von Informationsinhalt oder einen zweiten Typ von Informationsinhalt repräsentiert, wobei der erste Typ von Informationsinhalt einen Codewert haben kann, der mit einem Codewert des zweiten Typs von Informationsinhalt identisch ist.

2. Verfahren nach Anspruch 1,
**dadurch gekennzeichnet,**
**daß** ein besonderer eindeutiger Informationsinhalt exklusiv einem besonderen eindeutigen Codewert zugeordnet ist.

3. Verfahren nach Anspruch 2,
**dadurch gekennzeichnet,**
**daß** ein Informationsinhalt, der einem Codewert zugeordnet ist, der auf den genannten besonderen eindeutigen Codewert folgt, als ein Informationsinhalt identifiziert wird, der ein Zubehörgerät identifiziert.

4. Verfahren nach Anspruch 3,
**dadurch gekennzeichnet,**
**daß** ein Informationsinhalt, der einem Codewert zugeordnet ist, der auf einen ein Zubehörgerät identifizierenden Codewert folgt, als Befehl identifiziert wird.

5. Mobiles Endgerät (40), das mit einem Zubehörgerät (5) verbindbar ist, mit einer Bewertungseinrichtung (44) zum Bewerten eines Codewerts, der repräsentiert wird durch einen an einem Verbinder (41) zum Verbinden des mobilen Endgeräts (40) mit einem Zubehörgerät (50) auftretenden elektrischen Zustand und der einer Verbindung des Zubehörgeräts (50) zugeordnet ist,
**dadurch gekennzeichnet,**
**daß** die Bewertungseinrichtung (44) so ausgebildet ist, daß sie einen Informationsinhalt identifiziert, der dem Codewert zugeordnet ist, der entweder einen ersten Typ von Informationsinhalt zur Identifizierung eines mit dem Verbinder (41) verbunden Zubehörgeräts (50) repräsentiert oder einen zweiten Typ von Informationsinhalt, der eine andere Information repräsentiert, wobei der erste Typ von Informationsinhalt einen Codewert haben kann, der mit einem Codewert des zweiten Typs von Informationsinhalt identisch ist, und wobei in Abhängigkeit von der Historie der vorangehenden Codewerte entschieden wird, ob ein Codewert den ersten Typ von Informationsinhalt oder den zweiten Typ von Informationsinhalt repräsentiert.

6. Mobiles Endgerät nach Anspruch 5,
**dadurch gekennzeichnet,**
**daß** die Bewertungseinrichtung so ausgebildet ist, daß sie den Informationsinhalt eines besonderen eindeutigen Codewerts so identifiziert, daß kein Zubehörgerät mit dem mobilen Endgerät verbunden ist.

7. Mobiles Endgerät nach Anspruch 6,
**dadurch gekennzeichnet,**
**daß** ein Informationsinhalt, der einem Codewert zugeordnet ist, der auf den genannten besonderen eindeutigen Codewert folgt, als Informationsinhalt identifiziert wird, der ein Zubehörgerät (50) identifiziert.

8. Mobiles Endgerät nach Anspruch 7,
**dadurch gekennzeichnet,**
**daß** ein Informationsinhalt, der einem Codewert zugeordnet ist, der auf einen Codewert folgt, der als Informationsinhalt identifiziert wird, der ein Zubehörgerät (50) identifiziert, als Befehl aus dem identifizierten Zubehörgerät identifiziert wird.

9. Mobiles Endgerät nach einem der Ansprüche 5 bis 8,
**dadurch gekennzeichnet,**
**daß** der der Verbindung eines Zubehörgeräts zugeordnete elektrische Zustand von einem Spannungspegel gebildet wird.

10. Mobiles Endgerät nach einem der Ansprüche 5 bis 8,
**dadurch gekennzeichnet,**
**daß** der der Verbindung eines Zubehörgeräts zugeordnet elektrische Zustand von der Intensität eines Stromflusses gebildet wird.

11. Zubehörgerät, das mit einem mobilen Endgerät (40) nach einem der Ansprüche 5 bis 10 verbindbar ist, wobei das Zubehörgerät (50) einen Codegeneratoreinrichtung (54) zur Erzeugung eines elektrischen Zustands aufweist, der einen Codewert repräsentiert,
**dadurch gekennzeichnet,**
**daß** die Codegeneratoreinrichtung (54) so ausgebildet ist, daß sie eine Funktion des Zubehörgeräts (50) in einen entsprechenden Codewert umwandelt,
und **daß** das Zubehörgerät (50) eine Verriegelungseinrichtung (55) aufweist, die so ausgebildet ist, daß sie den elektrischen Zustand so ändert, daß er einen Codewert repräsentiert, der das Zubehörgerät (50) identifiziert, wenn das Zubehörgerät (50) mit dem mobilen Endgerät (40) verbunden wird.

12. Softwareprodukt für die Verwendung in einem mobilen Endgerät (40), das so ausgebildet ist, daß es ein Verfahren nach einem der Ansprüche 1 bis 4 ausführt, wenn es in einer Speichereinrichtung (46) gespeichert und in einer Verarbeitungseinrichtung (45) eines entsprechenden mobilen Endgeräts (40) ausgeführt wird.

## Revendications

1. Procédé d'identification d'un contenu informationnel attribué à un codet déterminé au niveau d'un connecteur (41) d'un terminal mobile (40), moyennant quoi le codet représente un premier type de contenu informationnel pour identifier un dispositif accessoire (50) qui est connecté au connecteur (41) ou un second type de contenu informationnel représentant différentes informations,
**caractérisé en ce que**
le fait qu'un codet représente un premier type de contenu informationnel ou un second type de contenu informationnel est décidé en fonction de l'historique des codets précédents, moyennant quoi le premier type de contenu informationnel peut avoir un codet identique à un codet du second type de contenu informationnel.

2. Procédé selon la revendication 1,
**caractérisé en ce qu'**
un contenu informationnel unique distinctif est exclusivement attribué à un codet unique distinctif.

3. Procédé selon la revendication 2,
**caractérisé en ce qu'**
un contenu informationnel attribué à un codet suivant ledit codet unique distinctif est identifié comme contenu informationnel identifiant un dispositif accessoire (50).

4. Procédé selon la revendication 3,
**caractérisé en ce qu'**
un contenu informationnel attribué à un codet suivant un codet identifiant un dispositif accessoire (50) est identifié comme instruction.

5. Terminal mobile (40) adapté pour être connecté à des dispositifs accessoires (50) comprenant un moyen d'évaluation (44) pour évaluer un codet qui est représenté par un état électrique qui est présent au niveau d'un connecteur (41) pour connecter le terminal mobile (40) à un dispositif accessoire (50), et qui est associé à une connexion du dispositif accessoire (50),
**caractérisé en ce que**
le moyen d'évaluation (44) est adapté pour identifier un contenu informationnel attribué au codet qui représente un premier type de contenu informationnel pour identifier un dispositif accessoire (50) qui est connecté au connecteur (41) ou un second type de contenu informationnel représentant différentes informations, moyennant quoi le premier type de contenu informationnel peut avoir un codet identique à un codet du second type de contenu informationnel et le fait qu'un codet représente le premier type de contenu informationnel ou le second type de contenu informationnel est décidé en fonction de l'historique des codets précédents.

6. Terminal mobile selon la revendication 5,
**caractérisé en ce que**
le moyen d'évaluation (44) est adapté pour identifier le contenu informationnel d'un codet unique distinctif lorsque aucun dispositif accessoire n'est connecté au terminal mobile.

7. Terminal mobile selon la revendication 6,
**caractérisé en ce qu'**
un contenu informationnel attribué à un codet suivant ledit codet unique distinctif est identifié comme contenu informationnel identifiant un dispositif accessoire (50).

8. Terminal mobile selon la revendication 7,
**caractérisé en ce qu'**
un contenu informationnel attribué à un codet suivant un codet qui est identifié comme contenu informationnel identifiant un dispositif accessoire (50) est identifié comme instruction du dispositif accessoire identifié.

9. Terminal mobile selon l'une quelconque des revendications 5 à 8,
**caractérisé en ce que**
ledit état électrique associé à une connexion d'un dispositif accessoire est constitué par un niveau de tension.

10. Terminal mobile selon l'une quelconque des revendications 5 à 8,
**caractérisé en ce que**
ledit état électrique associé à une connexion d'un dispositif accessoire est constitué par une intensité d'une circulation de courant.

11. Dispositif accessoire adapté pour être connecté à un terminal mobile (40) selon l'une quelconque des revendications 5 à 10, le dispositif accessoire (50) ayant un moyen de génération de code (54) pour générer un état électrique représentant un codet,
**caractérisé en ce que**
le moyen de génération de code (54) est adapté pour transformer une fonction du dispositif accessoire (50) en un codet respectif, et **en ce que** le dispositif accessoire (50) comprend un moyen de verrouillage (55) qui est adapté pour commander l'état électrique pour représenter un codet identifiant le dispositif accessoire (50) lorsque le dispositif accessoire (50) est connecté au terminal mobile (40).

12. Logiciel destiné à une utilisation sur un terminal mobile (40) adapté pour mettre en oeuvre le procédé selon l'une quelconque des revendications 1 à 4 lorsqu'il est stocké dans un moyen de stockage (46) et exécuté dans un moyen de traitement (45) d'un terminal mobile respectif (40).
